# EUROPEAN PATENT APPLICATION

(11) **EP 4 223 905 A1**
(43) Date of publication of application: **09.08.2023**
(21) Application number: 22155710.1
(22) Date of filing: 08.02.2022
(51) Int. Cl.: C23C 18/24, C23C 18/26, C23C 18/20

(54) **ETCHING COMPOSITION AND METHOD FOR ETCHING AT LEAST ONE SURFACE OF A SULFUR-CONTAINING THERMOPLASTIC RESIN-SUBSTRATE**

(71) Applicant: Atotech Deutschland GmbH & Co. KG, 10553 Berlin (DE)
(72) Inventor: Bayer, Frank, 10553 Berlin (DE); Karagöl, Serdar Turan, 10553 Berlin (DE)
(74) Representative: Atotech Deutschland GmbH & Co. KG

(57) **Abstract**

The present invention relates to a method for etching at least one surface of a sulfur-containing thermoplastic resin-substrate, the method comprising the steps (A) to (C), wherein step (C) is an etching step including a contacting with a liquid etching composition. The liquid etching composition comprises (a) a mineral acid selected from the group consisting of sulfuric acid and nitric acid, and (b) a dialkyl sulfoxide and/or a phenyl-comprising sulfoxide.

## Description

### Field of the Invention

The present invention relates to a method for etching at least one surface of a sulfur-containing thermoplastic resin-substrate, the method comprising the steps (A) to (C), wherein step (C) is an etching step including a contacting with a liquid etching composition. The liquid etching composition comprises (a) a mineral acid selected from the group consisting of sulfuric acid and nitric acid, and (b) a dialkyl sulfoxide and/or a phenyl-comprising sulfoxide.

### Background of the Invention

Metallizing resin-substrates such as plastic substrates has a long history in modern technology. Typical applications are found in automotive industry as well as for sanitary articles.

However, making such a resin-substrate receptive for a metal layer is demanding. Typically, a respective method starts with a surface modification of its surface, typically known as etching.

This becomes even more demanding for resins-substrates belonging to very inert and resistant resin-substrates such as thermoplastic resins, particularly high-performance thermoplastic resins such as PPS. Typically, such resins-substrates are used to provide a high measure of chemical and/or thermal resistance. This inherently results in a very little susceptibility to common etching methods/compositions.

Nevertheless, etching of PPS is known in the art.

For example, US 5,230,927 discloses a process for metal plating a resin molded article molded from a resin composition containing as main components, a polyphenylene sulfide resin and a glass-reinforcing agent. The process includes a treatment with a mixed liquid of nitric acid and a fluoride salt.

WO 2013/122804 A1 discloses a method of preparing a plastic article to accept plating thereon, wherein at least a portion of the plastic article is rendered plateable by sulfonation.

EP 0 183 060 B1 discloses a metallization of non-conductive plastic base materials including PPS. An etching thereof is for example carried out by contacting with nitric acid.

Alternatively, reinforced polyphenylene sulfide resin-substrates are known, which are specifically modified to simplify subsequent metallization. For example, US 4,883,702 discloses a polyphenylene sulfide composition useful for plating, comprising a polyphenylene sulfide resin, glass fibers, and potassium titanate fibers.

However, those known methods and etching compositions typically suffer at least one of these disadvantages: a too destructive etching, too little etching, too sophisticated and/or harmful etching conditions. Thus, there is an ongoing demand to further improve existing technologies. This is particularly the case since high performance thermoplastic resins such as PPS are more and more utilized in modern day 5G communication applications, such as housings for communication systems.

### Objective of the present Invention

It was therefore the objective of the present invention to overcome the above-mentioned shortcomings of the prior art.

It is in particular an objective of the present invention to provide a method for etching at least one surface of a sulfur-containing thermoplastic resin-substrate, which can be easily implemented in existing plating lines, provides excellent etching results under a broad working window, and is easy to handle while it is significantly less detrimental to the environment and/or to workers handling the process. It was furthermore an objective to provide a fluoride- and bifluoride-free, respectively, etching composition.

### Summary of the Invention

Above mentioned objectives are solved by a method for etching at least one surface of a sulfur-containing thermoplastic resin-substrate, the method comprising the steps
(A) providing the resin-substrate,
(B) optionally, contacting the provided resin-substrate with one or more than one pre-treatment composition such that a pre-treated resin-substrate results,
(C) contacting the resin-substrate obtained after step (A) or (B) with a liquid etching composition such that an etched resin-substrate results, the etching composition comprising
   (a) a mineral acid selected from the group consisting of sulfuric acid and nitric acid, and
   (b) a dialkyl sulfoxide and/or a phenyl-comprising sulfoxide.

In the context of the present invention, concentrations are given in volume percentage, based on the total volume of the liquid etching composition, if not stated otherwise.

Own experiments have shown (see examples below in the text) that the method of the present invention as well as the etching composition of the present invention result in a very desired etching pattern suitable for further metallization of at least one surface of a sulfur-containing thermoplastic resin-substrate such as PPS. In many cases such resin-substrates show a very strong resistance to commonly used etching compositions.

Furthermore, the method as well as the etching composition is comparatively simple to prepare and allows a simple overall handling. This also means that an implementation thereof in existing etch- and plating lines is easily possible.

It was surprising that a sulfoxide as described throughout the text, most preferably dimethyl sulfoxide, operates as etching moderator in combination with a mineral acid selected from the group consisting of sulfuric acid and nitric acid, acids which otherwise would not sufficiently etch and/or would over-etch a sulfur-containing thermoplastic resin-substrate (see examples below). It was also surprising that this combination allows very moderate etching conditions regarding temperature and etching time.

### Detailed Description of the Invention

The method of the present invention primarily includes a contacting with a specific liquid etching composition to obtain an etched resin-substrate as defined throughout the present text.

### Step (A): providing the resin-substrate:

In step (A) the resin-substrate is provided.

In the context of the present invention, the term "sulfur-containing thermoplastic resin-substrate" denotes that the sulfur is chemically integrated into the resin. This means that it belongs to the chemical nature of the thermoplastic resin-substrate. It is therefore chemically bound within a polymeric resin-matrix.

Preferred is a method of the present invention, wherein the sulfur-containing thermoplastic resin-substrate is a reinforced sulfur-containing thermoplastic resin-substrate reinforced by comprising a reinforcement material. A preferred reinforcement material comprises a filler, preferably one or more than one filler selected from the group consisting of glass fibers, glass particles, carbon particles, silica particles, metal particles, metal oxide particles, and silicates. Thus, such fillers are considered as a reinforcement material. Preferred metal particles comprise iron. In some cases, such particles are preferred for an increased heat dissipation, most preferably if said resin-substrate is utilized in electronic devices generating comparatively high amounts of heat.

Preferred is a method of the present invention, wherein the sulfur-containing thermoplastic resin-substrate comprises the reinforcement material, respectively the filler, in a total amount ranging from 10 wt.-% to 70 wt.-%, based on the total weight of the sulfur-containing thermoplastic resin-substrate, preferably from 20 wt.-% to 65 wt.-%, more preferably from 25 wt.-% to 60 wt.-%, even more preferably from 30 wt.-% to 55 wt.-%, most preferably from 35 wt.-% to 50 wt.-%.

In some cases, preferred is a method of the present invention, wherein the sulfur-containing thermoplastic resin-substrate is substantially free of, preferably does not comprise, potassium titanate fibers, preferably is substantially free of, preferably does not comprise, a titanate, most preferably is substantially free of, preferably does not comprise, any titanium.

Preferred is a method of the present invention, wherein in step (A) the sulfur-containing thermoplastic resin-substrate has a melting point of 230°C or more, preferably of 250°C or more, even more preferably of 260°C or more, yet even more preferably of 270°C or more, most preferably of 280°C or more.

Preferred is a method of the present invention, wherein the sulfur-containing thermoplastic resin-substrate comprises a phenylene moiety, preferably a plurality of phenylene moieties, most preferably poly-phenylene moieties.

Preferred is a method of the present invention, wherein in step (A) the sulfur-containing thermoplastic resin-substrate comprises polyphenylene sulfide (PPS), more preferably reinforced polyphenylene sulfide (PPS), most preferably glass-reinforced polyphenylene sulfide (PPS).

### Optional step (B): contacting with one or more than one pre-treatment composition:

In optional step (B), the provided resin-substrate is contacted with one or more than one pre-treatment composition such that a pre-treated resin-substrate is obtained.

In most cases it is preferred that step (B) is optional. However, in some cases it is more preferred to carry out step (B).

Preferred is a method of the present invention, wherein in step (B) the one or more than one pre-treatment composition comprises, preferably is, a cleaning composition.

The one or more than one pre-treatment composition preferably utilized in the method of the present invention comprises water. Most preferably, water is the only solvent in the one or more than one pre-treatment composition.

Preferred is a method of the present invention, wherein the one or more than one pre-treatment composition is acidic or alkaline, preferably alkaline. In most cases, the one or more than one pre-treatment composition is for cleaning, most preferably for degreasing.

Preferred is a method of the present invention, wherein step (B) does not comprise a swelling step. Thus, preferred is a method of the present invention, wherein the one or more than one pre-treatment composition does not comprise a swelling composition. Thus, preferred is a method of the present invention, wherein in step (C) the resin-substrate is not a swelled resin-substrate. This preferably includes that in step (B) the resin-substrate is not contacted with an organic solvent, preferably a typical organic solvent for swelling plastic substrates (examples are *gamma*-butyrolactone and 2-butoxyethanol). It has been shown that a sulfur-containing thermoplastic resin-substrate, in particular PPS, is typically of such a high chemical resistance that a swelling effect is either little or was not observed at all at temperatures up to 200°C. However, in the context of the present invention, a swelling step is not required.

Preferred is a method of the present invention, wherein after step (B) the pre-treated resin-substrate is rinsed in a rinsing step, preferably followed by a drying step. Preferably the rinsing step is carried out with water. The drying step is very preferred to avoid a drag in of water into the liquid etching composition.

### Step (C): contacting with a liquid etching composition:

In step (C), the resin-substrate obtained after step (A) or (B) is contacted with a liquid etching composition such that an etched resin-substrate is obtained.

The liquid etching composition:
The liquid etching composition comprises
   (a) a mineral acid selected from the group consisting of sulfuric acid and nitric acid, and
   (b) a dialkyl sulfoxide and/or (preferably or) a phenyl-comprising sulfoxide.
Thus, the liquid etching composition is acidic, more preferably strongly acidic, most preferably having a pH of zero or below.

In many cases, a method of the present invention is preferred, wherein the liquid etching composition is a solution. Thus, preferably the liquid etching composition in itself does not form solids and/or particles. However, this does not exclude that during step (C) of the method of the present invention, such solids and/or particles are formed from the resin-substrate or particulate material is added to the liquid etching composition for drying (further information see below).

Most preferred is a method of the present invention, wherein in the liquid etching composition the mineral acid comprises, preferably is, sulfuric acid. More preferably, nitric acid is not present. Most preferably, sulfuric acid is the only mineral acid in the liquid etching composition, preferably the only acid at all.

Preferably, the liquid etching composition comprises (b) a dialkyl sulfoxide but does not comprise a phenyl-comprising sulfoxide. Thus, in such cases, a phenyl-comprising sulfoxide is not present.

Preferred is a method of the present invention, wherein in the dialkyl sulfoxide both dialkyl moieties are identical or different, preferably identical.

More preferred is a method of the present invention, wherein in the liquid etching composition the dialkyl sulfoxide comprises, preferably is, dimethyl sulfoxide (DMSO), diethyl sulfoxide (DESO), and/or dipropyl sulfoxide, most preferably dimethyl sulfoxide (DMSO). Most preferably, the dialkyl sulfoxide is the only sulfoxide in the liquid etching composition.

Most preferred is a method of the present invention, wherein in the liquid etching composition the dialkyl sulfoxide comprises, preferably is, dimethyl sulfoxide (DMSO). More preferably, DMSO is the only dialkyl sulfoxide in the liquid etching composition, most preferably the only sulfoxide.

Preferred is a method of the present invention, wherein in the liquid etching composition the phenyl-comprising sulfoxide comprises, preferably is, diphenyl sulfoxide and/or phenyl-vinyl sulfoxide. In some cases, the phenyl-comprising sulfoxide is the only sulfoxide in the liquid etching composition.

As mentioned above, own experiments have shown that the sulfoxides as described above, preferably the dialkyl sulfoxide, operate synergistically as an etching moderator. Thus, each of (a) and (b) individually does not show the etching effect as (a) and (b) in combination.

Preferred is a method of the present invention, wherein in the liquid etching composition (a), i.e. the mineral acid selected from the group consisting of sulfuric acid and nitric acid, has a total concentration ranging from 45 vol.-% to 99.4 vol.-%, based on the total volume of the liquid etching composition, preferably from 52 vol.-% to 98.5 vol.-%, more preferably from 60 vol.-% to 97.5 vol.-%, even more preferably from 68 vol.-% to 96.5 vol.-%, yet even more preferably from 76 vol.-% to 95.5 vol.-%, most preferably from 84 vol.-% to 94.5 vol.-%.

More preferred is a method of the present invention, wherein in the liquid etching composition (a) has a total concentration ranging from 85.5 vol.-% to 94.5 vol.-%, based on the total volume of the liquid etching composition, preferably from 87 vol.-% to 94.5 vol.-%, more preferably from 88 vol.-% to 94.5 vol.-%, most preferably from 89 vol.-% to 94 vol.-%.

In the context of the present invention, the aforementioned total concentrations for the acids (including the preferred, more preferred, etc. concentrations) refer to the sum of sulfuric acid and nitric acid (if both are present), although not both need to be present necessarily.

Most preferred is a method of the present invention, wherein in the liquid etching composition (a) comprises sulfuric acid and sulfuric acid has a concentration ranging from 45 vol.-% to 99.4 vol.-%, based on the total volume of the liquid etching composition, preferably from 52 vol.-% to 98.5 vol.-%, more preferably from 60 vol.-% to 97.5 vol.-%, even more preferably from 68 vol.-% to 96.5 vol.-%, yet even more preferably from 76 vol.-% to 95.5 vol.-%, most preferably from 84 vol.-% to 94.5 vol.-%. Most preferably, nitric acid is not present.

Even most preferred is a method of the present invention, wherein in the liquid etching composition (a) comprises sulfuric acid and sulfuric acid has a concentration ranging from 85.5 vol.-% to 94.5 vol.-%, based on the total volume of the liquid etching composition, preferably from 87 vol.-% to 94.5 vol.-%, more preferably from 88 vol.-% to 94.5 vol.-%, most preferably from 89 vol.-% to 94 vol.-%. Most preferably, nitric acid is not present.

Preferred is a method of the present invention, wherein in the liquid etching composition (b), i.e. the dialkyl sulfoxide and the phenyl-comprising sulfoxide, has a total concentration ranging from 0.5 vol.-% to 35 vol.-%, based on the total volume of the liquid etching composition, preferably from 1 vol.-% to 30 vol.-%, more preferably from 1.5 vol.-% to 25 vol.-%, even more preferably from 2 vol.-% to 20 vol.-%, most preferably from 2.5 vol.-% to 15 vol.-%.

More preferred is a method of the present invention, wherein in the liquid etching composition (b) has a total concentration ranging from 3 vol.-% to 10 vol.-%, based on the total volume of the liquid etching composition, preferably from 3 vol.-% to 9 vol.-%, more preferably from 3 vol.-% to 8 vol.-%, even more preferably from 3 vol.-% to 7 vol.-%, most preferably from 3 vol.-% to 6 vol.-%.

In the context of the present invention, the aforementioned total concentrations (including the preferred, more preferred, etc. concentrations) refer to the sum of all dialkyl sulfoxides and phenyl-comprising sulfoxides. The aforementioned concentrations for (b) most preferably refer to a liquid etching composition comprising a dialkyl sulfoxide but not comprising a phenyl-comprising sulfoxide.

Most preferred is a method of the present invention, wherein in the liquid etching composition (b) comprises dimethyl sulfoxide and dimethyl sulfoxide has a concentration ranging from 0.5 vol.-% to 35 vol.-%, based on the total volume of the liquid etching composition, preferably from 1 vol.-% to 30 vol.-%, more preferably from 1.5 vol.-% to 25 vol.-%, even more preferably from 2 vol.-% to 20 vol.-%, most preferably from 2.5 vol.-% to 15 vol.-%. Preferably, dimethyl sulfoxide is the only dialkyl sulfoxide, most preferably the only sulfoxide, in the liquid etching composition.

Even most preferred is a method of the present invention, wherein in the liquid etching composition (b) comprises dimethyl sulfoxide and dimethyl sulfoxide has a concentration ranging from 3 vol.-% to 10 vol.-%, based on the total volume of the liquid etching composition, preferably from 3 vol.-% to 9 vol.-%, more preferably from 3 vol.-% to 8 vol.-%, even more preferably from 3 vol.-% to 7 vol.-%, most preferably from 3 vol.-% to 6 vol.-%. Preferably, dimethyl sulfoxide is the only dialkyl sulfoxide, most preferably the only sulfoxide.

Preferred is a method of the present invention, wherein the liquid etching composition is substantially free of, preferably does not comprise, fluoride and/or bifluoride anions.

Preferred is a method of the present invention, wherein the liquid etching composition is substantially free of, preferably does not comprise, trivalent chromium ions and hexavalent chromium compounds, preferably is substantially free of, preferably does not comprise, any compounds and ions comprising chromium.

Preferred is a method of the present invention, wherein the liquid etching composition is substantially free of, preferably does not comprise, permanganate ions, preferably is substantially free of, preferably does not comprise, any compounds and ions comprising manganese.

In some cases, preferred is a method of the present invention, wherein the liquid etching composition is substantially free of, preferably does not comprise, phosphoric acid, preferably is substantially free of, preferably does not comprise, phosphate anions. This is very preferred since phosphate anions typically require an additional effort during waste-water treatment.

Preferred is a method of the present invention, wherein the liquid etching composition is substantially free of, preferably does not comprise, hydrofluoric acid, preferably is substantially free of, preferably does not comprise, fluoride anions. This is very preferred since fluoride anions typically require an additional effort during waste-water treatment and health problematic.

Preferred is a method of the present invention, wherein the liquid etching composition is substantially free of, preferably does not comprise, ammonia and ammonium ions. This is very preferred since ammonia and ammonium ions, respectively, typically require an additional effort during waste-water treatment.

Preferred is a method of the present invention, wherein the liquid etching composition is substantially free of, preferably does not comprise, dimethylacetamide.

Preferred is a method of the present invention, wherein the liquid etching composition is substantially free of, preferably does not comprise, dimethylformamide.

Preferred is a method of the present invention, wherein the liquid etching composition
consists of (a) and (b),
   or
besides (a) and (b), additionally comprises (c) water, preferably a balance of water.

Although it is preferred that the liquid etching composition consists of (a) and (b), typically small amounts of water are present. Water is usually already present because sulfuric acid as well as nitric acid, even in highly concentrated forms, are commercially available only with residual amounts of water. Own experiments have shown that such residual amounts of water are acceptable and tolerable, respectively. Thus, the presence of water is in most cases preferred.

Preferred is a method of the present invention, wherein the liquid etching composition comprises water in an amount ranging from 0.1 vol.-% to 20 vol.-%, based on the total volume of the liquid etching composition, preferably ranging from 0.5 vol.-% to 18 vol.-%, more preferably from 1 vol.-% to 15 vol.-%, even more preferably from 1.5 vol.-% to 12 vol.-%, yet even more preferably from 2 vol.-% to 9 vol.-%, most preferably from 2.5 vol.-% to 6 vol.-%, even most preferably from 2.5 vol.-% to 5 vol.-%. Own experiments show that if the amount of water is too high, either the etching result is not sufficient anymore or a too low etching efficiency must be compensated by higher etching temperatures and/or etching times. This significantly reduces the efficiency of the method of the present invention.

More preferred is a method of the present invention, wherein the liquid etching composition comprises water in an amount ranging from 2.5 vol.-% to 5.5 vol.-%, based on the total volume of the liquid etching composition, preferably ranging from 2.5 vol.-% to 5 vol.-%, most preferably from 3 vol.-% to 5 vol.-%. These very preferred amounts of water are most preferred for a freshly prepared liquid etching composition. However, during utilization and the inherent characteristic of sulfuric acid to bind water, the liquid etching composition comprises water in usually comparatively higher amounts, preferably even up to 10 vol.-%. At the same time, the total amount of (a) is typically reduced, based on the total volume of the liquid etching composition.

Thus, in some cases preferred is a method of the present invention, wherein the liquid etching composition comprises a drying material. This is for binding/removing water.

Preferably, the drying material has at least a certain chemical resistance against strong mineral acids, most preferably against sulfuric acid and/or nitric acid.

Preferably, the drying material has a higher water binding affinity compared to the water binding affinity of a mineral acid, more preferably compared to the water binding affinity of sulfuric acid and/or nitric acid, most preferably compared to the water binding affinity of sulfuric acid.

Preferably, the drying material comprises a zeolite, a molecular sieve, silica, calcium, inorganic calcium compounds, inorganic aluminum compounds, and/or inorganic potassium compounds.

A preferred inorganic calcium compound comprises calcium oxide and/or calcium sulfate.

A preferred inorganic potassium compound comprises potassium carbonate.

A preferred inorganic aluminum compound comprises aluminum oxide.

In some cases, a method of the present invention is preferred, wherein the liquid etching composition is continually, semi-continually, or occasionally, subjected to an electrolytic treatment for water removal. In this case, an external current is applied by utilizing at least one anode and at least one cathode to degrade water.

In some cases, a method of the present invention is preferred, wherein the liquid etching composition is subjected to a flow of dry air and/or nitrogen gas. In fact, this approach is not limited as long as a dry gas is utilized.

Preferably, the dry air and the nitrogen gas are introduced into the liquid etching composition or the space over the surface of the liquid etching composition is purged with the dry air and the nitrogen gas, respectively. In both cases a gas film is formed over the surface of the liquid etching composition preventing humidity from entering the liquid etching composition.

Preferred is a method of the present invention, wherein the liquid etching composition further comprises one or more than one surfactant. Surfactants are typically needed to increase wettability. There are no particular restrictions regarding the kind of surfactants. Thus, preferred are cationic surfactants, anionic surfactants, and/or non-ionic surfactants. However, preferred is a method of the present invention, wherein the liquid etching composition is substantially free of, preferably does not comprise, fluorinated surfactants, preferably is substantially free of, preferably does not comprise, fluorinated organic compounds. Since environmental restrictions are getting more and more demanding, fluorinated organic compounds, in particular fluorinated surfactants, are less desired or even prohibited.

The contacting in step (C):
Preferred is a method of the present invention, wherein during step (C) the liquid etching composition has a temperature ranging from 30°C to 120°C, preferably from 35°C to 100°C, more preferably from 40°C to 90°C, even more preferably from 45°C to 80°C, most preferably from 50°C to 75°C. If the temperature is significantly below 30°C, in many cases the etching result is too little, or a too long etching time must be applied to achieve a still reasonable etching effect. Contrary, if the temperature is significantly above 120C°, in most cases an undesired over-etching is achieved, even at comparatively short etching times. Furthermore, at higher temperatures in some cases, commonly used plating tank materials can be damaged.

Preferred is a method of the present invention, wherein step (C) is carried out for a time ranging from 1 minute to 80 minutes, preferably from 2 minutes to 60 minutes, more preferably from 3 minutes to 45 minutes, even more preferably from 4 minutes to 35 minutes, most preferably from 5 minutes to 25 minutes. This is a so-called etching time.

Preferred is a method of the present invention, wherein in step (C) the contacting is an immersion into the liquid etching composition and/or by spraying the liquid etching composition, preferably by immersion.

Without withing to be bound by theory, it is assumed that during step (C) the polymeric resin-matrix on the surface is partly dissolved and the reinforcement material in direct vicinity thereto is at least partly released. This leads to a significant surface roughening including the formation of comparatively deep caverns, mostly depending on the size of the reinforcement material.

Preferred is a method of the present invention, wherein the sulfur-containing thermoplastic resin-substrate is not contacted with N-methylpyrrolidone before and/or after step (C), preferably is not contacted with a lactam before and/or after step (C).

Preferred is a method of the present invention, wherein the sulfur-containing thermoplastic resin-substrate is not contacted with dimethylacetamide and/or dimethylformaide before and/or after step (C).

Further steps:
After step (C), i.e. after etching the resin-substrate, typically a metallization follows.

Preferred is a method of the present invention additionally comprising after step (C) step
(D) contacting the etched resin-substrate with an activation composition such that an activated resin-substrate is obtained;
   and/or (preferably and)
(E) contacting the etched resin-substrate or the activated resin-substrate with a first metalizing composition such that a first metal or metal alloy layer is deposited thereon resulting in a first metalized resin-substrate.

In this regard, the method of the present invention is preferably also a method for activating at least one surface of a sulfur-containing thermoplastic resin-substrate, respectively, a method for metallizing at least one surface of a sulfur-containing thermoplastic resin-substrate.

In the method of the present invention, preferably step (D) is a step separated and independent from step (C). In other words, the liquid etching composition utilized in step (C) is not the activation composition utilized in step (D).

In step (D) of the method of the present invention, the etched resin-substrate is contacted with an activation composition.

Preferred is a method of the present invention, wherein in step (D) the activation composition comprises palladium, preferably dissolved palladium ions or colloidal palladium, most preferably colloidal palladium. Preferably, the colloidal palladium comprises tin.

Preferred is a method of the present invention, wherein in step (D) the activation composition comprises palladium in a total concentration ranging from 20 mg/L to 200 mg/L, based on the total volume of the activation composition, preferably ranging from 40 mg/L to 150 mg/L, even more preferably from 50 mg/L to 110 mg/L, most preferably from 55 mg/L to 80 mg/L. Preferably, this total concentration includes both dissolved palladium ions and colloidal palladium. Above concentrations are based on the element palladium.

Preferred is a method of the present invention, wherein in step (D) the activation composition has a temperature ranging from 25°C to 70°C, preferably from 30°C to 60°C, even more preferably from 36°C to 50°C, most preferably from 39°C to 48°C.

Preferred is a method of the present invention, wherein in step (D) the contacting is carried out for a time ranging from 1 minute to 15 minutes, preferably from 2 minutes to 12 minutes, even more preferably from 3 minutes to 9 minutes, most preferably from 4 minutes to 7 minutes.

Preferred is a method of the present invention, wherein step (D) comprises step
(D-1) contacting the activated resin-substrate with an accelerator composition to modify the activated resin-substrate, the accelerator composition comprising
- no reducing agent but at least one complexing agent for tin ions, if in step (D) the activation composition comprises colloidal palladium, or
- a reducing agent for reducing palladium ions to metallic palladium, if in step (D) the activation composition comprises palladium ions but no colloidal palladium.

Preferred is a method of the present invention, wherein in step (D-1) the accelerator composition comprises no reducing agent but at least one complexing agent for tin ions and is acidic, preferably comprising in addition sulfuric acid.

In the context of the present invention, step (D-1) as defined above is carried out after contacting the etched resin-substrate with an activation composition such that an activated resin-substrate is obtained.

In step (E) of the method of the present invention, the etched resin-substrate or the activated resin-substrate is contacted with a first metalizing composition such that a first metal or metal alloy layer is deposited thereon resulting in a first metalized resin-substrate.

Thus, step (E) either follows after the activation in step (D) or is applied to the etched resin-substrate as a direct metallization, which does not require an activation. In the latter case, step (D) is not needed and therefore not applied. However, preferred is a method of the present invention, wherein steps (D) and (E) are carried out.

Preferred is a method of the present invention, wherein in step (E) the first metalizing composition comprises nickel ions, preferably nickel ions and a reducing agent for reducing said nickel ions, such that the first metal or metal alloy layer is a nickel or nickel alloy layer, respectively. Thus, the first metallized resin-substrate is preferably a first nickel or nickel alloy metallized resin-substrate.

Preferred is a method of the present invention, wherein in step (E) the first metalizing composition is alkaline, preferably has a pH ranging from 8 to 11, preferably from 8.2 to 10.2, more preferably from 8.4 to 9.3, most preferably from 8.6 to 9.

Preferred is a method of the present invention, wherein in step (E) the first metalizing composition has a temperature ranging from 18°C to 60°C, preferably from 20°C to 55°C, even more preferably from 23°C to 50°C, most preferably from 26°C to 45°C.

Preferred is a method of the present invention, wherein in step (E) the contacting is carried out for a time ranging from 1 minute to 60 minutes, preferably from 3 minutes to 45 minutes, even more preferably from 5 minutes to 30 minutes, most preferably from 7 minutes to 18 minutes.

Preferably, the first metallized resin-substrate is subsequently further metallized.

Preferred is a method of the present invention additionally comprising after step (D) or (E), step (D) preferably including step (D-1), step
(F) contacting the activated resin-substrate or the first metallized resin-substrate with a second metalizing composition such that a second metal or metal alloy layer is deposited thereon resulting in a second metalized resin-substrate.

Preferred is a method of the present invention, wherein in step (F) the second metalizing composition comprises copper ions or nickel ions, preferably copper ions.

Preferred is a method of the present invention, wherein in step (F) the second metalizing composition is acidic or alkaline, preferably alkaline. However, in some cases it is preferred that in step (F) a metallization is applied as described below for (and instead of) step (G). In this case, step (F) is replaced by step (G).

More preferred is a method of the present invention, wherein in step (F) the second metalizing composition has a pH ranging from 7.5 to 11, preferably from 7.7 to 10, more preferably from 7.9 to 9.

Preferred is a method of the present invention, wherein in step (F) the second metalizing composition has a temperature ranging from 20°C to 80°C, preferably ranging from 25°C to 75°C, more preferably ranging from 30°C to 70°C, even more preferably ranging from 35°C to 65°C, most preferably ranging from 40°C to 60°C.

Preferred is a method of the present invention, wherein step (F) is an electrolytic deposition, preferably an electrolytic copper deposition. This means that an electrical current is applied. Preferably, the electrical current has a current density ranging from 0.3 A/dm² to 10 A/dm², preferably ranging from 0.5 A/dm² to 8 A/dm², more preferably ranging from 0.7 A/dm² to 6 A/dm², even more preferably ranging from 0.9 A/dm² to 4 A/dm², most preferably ranging from 1 A/dm² to 2 A/dm².

Preferred is a method of the present invention, wherein in step (F) the contacting is carried out for a time ranging from 1 minute to 45 minutes, preferably from 2 minutes to 30 minutes, even more preferably from 4 minute to 20 minutes, most preferably from 6 minutes to 15 minutes.

In the context of the present invention, it is very preferred that the first metalized resin-substrate (i.e. after step (E)) is further treated prior to step (F).

Thus, preferred is a method of the present invention, wherein prior to step (F) the first metallized resin-substrate is
- heat-treated, preferably at a temperature ranging from 120°C to 260°C, more preferably from 140°C to 250°C, even more preferably from 160°C to 240°C, most preferably from 180°C to 220°C,
   and/or (preferably or)
- contacted with a treatment composition, preferably comprising fluoride and/or bifluoride anions.

This step is optional. Thus, it is required only in special applications.

This particular step is preferably for releasing hydrogen gas and to avoid/reduce hydrogen embrittlement. Both options (i.e. heat-treatment vs. contacting with the treatment composition) are preferably alternatives to each other. This also mean that in the context of the present invention it is possible to fully avoid any compositions comprising fluoride/bifluoride anions and to work rather free from them. This is possible because the liquid etching composition utilized in the method of the present invention does not require fluoride and/or bifluoride anions. In contrast, fluoride and bifluoride anions are often present in commonly used etching compositions.

The treatment composition utilized prior to step (F) is preferably different from the first and any further metalizing compositions described throughout the present text; i.e. is not identical compared thereto. Thus, this step utilizing a treatment composition is a distinct step and the treatment composition itself is a distinct treatment composition.

Preferred is a method of the present invention, wherein in this step the treatment composition is acidic or alkaline, preferably acidic.

Preferred is a method of the present invention, wherein in this step the treatment composition comprises ammonium bifluoride (also named ammonium hydrogen fluoride) as source of the fluoride and/or bifluoride anions. Preferably, the total amount of fluoride and bifluoride anions is less than 10 wt.-%, based on the total weight of the treatment composition.

Preferred is a method of the present invention, wherein in this step the treatment composition has a temperature ranging from 25°C to 90°C, preferably from 30°C to 85°C, more preferably from 35°C to 80°C, even more preferably from 40°C to 75°C, yet even more preferably from 45°C to 70°C, most preferably from 50°C to 65°C.

Preferred is a method of the present invention, wherein in this step the contacting with the treatment composition is carried out for a time ranging from 10 seconds to 30 minutes, preferably from 45 seconds to 20 minutes, even more preferably from 1 minute to 10 minutes, most preferably from 1.5 minutes to 5 minutes.

Preferred is a method of the present invention, wherein in this step the heat-treating is carried out for a time ranging from 20 minutes to 10 hours, preferably from 45 minutes to 8 hours, even more preferably from 1 hour to 6 hours, most preferably from 1.5 hours to 4 hours.

After step (F) the second metallized resin-substrate is preferably further metallized.

Preferred is a method of the present invention additionally comprising after step (F) the step
(G) contacting the second metalized resin-substrate with a third metalizing composition such that a third metal or metal alloy layer is electrolytically deposited thereon resulting in a third metalized resin-substrate.

Preferred is a method of the present invention, wherein the third metalizing composition comprises copper ions, preferably in a concentration ranging from 0.05 mol/L to 3 mol/L, based on the total volume of the third metalizing composition, more preferably ranging from 0.1 mol/L to 2 mol/L, even more preferably ranging from 0.2 mol/L to 1.5 mol/L, most preferably ranging from 0.3 mol/L to 1 mol/L.

Preferred is a method of the present invention, wherein in step (G) an electrical current is applied, preferably a direct current. Preferably, the electrical current has a current density ranging from 0.2 A/dm² to 10 A/dm², preferably ranging from 0.5 A/dm² to 8 A/dm², more preferably ranging from 1 A/dm² to 7 A/dm², even more preferably ranging from 1.5 A/dm² to 6 A/dm², most preferably ranging from 2 A/dm² to 5 A/dm².

More preferred is a method of the present invention, wherein the third metalizing composition is acidic. More preferred is a method of the present invention, wherein the third metalizing composition has a pH of 2 or less, preferably of 1 or less.

With the third metalizing composition typically a very good leveling of the of the surface is obtained, thus, resulting in a very smooth surface without significant roughness. This is in many 5G applications very desired because a significant surface roughness has a negative impact on high frequency applications.

More preferred is a method of the present invention, wherein the third metalizing composition comprises at least one acid, preferably at least one inorganic acid, most preferably at least sulfuric acid. Preferably the at least one acid (more preferably the at least one inorganic acid, most preferably the at least sulfuric acid) has a total concentration ranging from 0.1 mol/L to 5 mol/L, based on the total volume of the third metalizing composition, preferably ranging from 0.2 mol/L to 3 mol/L, more preferably ranging from 0.3 mol/L to 2 mol/L, most preferably ranging from 0.4 mol/L to 1.5 mol/L.

Preferred is a method of the present invention, wherein the third metalizing composition has a temperature ranging from 20°C to 50°C, preferably ranging from 22°C to 43°C, more preferably ranging from 24°C to 35°C.

In the context of the present invention, the terms first, second, and third metalized resin-substrate denotes a correspondence to the respective step as defined above in the text and the resulting layer therefrom, rather than a numerical amount/number of metalized resin-substrates.

In the context of the present invention, preferably a sequence of steps, in particular of metallization steps, is defined. Preferably, this does not exclude intermediate steps in between those steps, such as rinsing steps.

The present invention furthermore refers to a very specific liquid etching composition for etching at least one surface of a sulfur-containing thermoplastic resin-substrate, the liquid etching composition comprising, based on the total volume of the liquid etching composition,
(a) 84 vol.-% to 94.5 vol.-%. sulfuric acid,
(b) 3 vol.-% to 10 vol.-% dimethyl sulfoxide, and
(c) 2.5 vol.-% to 6 vol.-% water.

The aforementioned regarding the method of the present invention preferably applies likewise to the specific liquid etching composition (if applicable), in particular the preferred, more preferred, etc. features disclosed in the context of the method of the present invention.

Preferably, sulfuric acid is the only mineral acid, most preferably the only acid at all.

Preferably, dimethyl sulfoxide is the only dialkyl sulfoxide in the liquid etching composition, most preferably the only sulfoxide.

More preferred is a specific liquid etching composition of the present invention, wherein (a) is present in an amount ranging from 85.5 vol.-% to 94.5 vol.-%, preferably from 87 vol.-% to 94.5 vol.-%, more preferably from 88 vol.-% to 94.5 vol.-%, most preferably from 89 vol.-% to 94 vol.-%.

More preferred is a specific liquid etching composition of the present invention, wherein (b) is present in an amount ranging from 3 vol.-% to 9 vol.-%, preferably from 3 vol.-% to 8 vol.-%, more preferably from 3 vol.-% to 7 vol.-%, most preferably from 3 vol.-% to 6 vol.-%. More preferred is a specific liquid etching composition of the present invention, wherein (c) is present in an amount ranging from 2.5 vol.-% to 5.5 vol.-%, preferably ranging from 2.5 vol.-% to 5 vol.-%, most preferably from 3 vol.-% to 5 vol.-%.

Most preferred is a specific liquid etching composition of the present invention comprising for etching at least one surface of a sulfur-containing thermoplastic resin-substrate, the liquid etching composition comprising, based on the total volume of the liquid etching composition,
(a) 89 vol.-% to 94 vol.-%. sulfuric acid,
(b) 3 vol.-% to 6 vol.-% dimethyl sulfoxide, and
(c) 3 vol.-% to 5 vol.-% water.

In the following, the present invention is further described by non-limiting examples.

### Examples

### First set of examples - etching:

The invention will now be illustrated by reference to the following non-limiting example.

In step (A) of the method of the present invention, a plurality of polyphenylene sulfide (PPS) substrates was used (30 to 60 wt.-% of reinforcement; comprising glass-fibers).

Prior to contacting the PPS substrates with the etching composition, they were pre-treated in step (B) by contacting them with an alkaline cleaning solution (Uniclean 151, product of Atotech) at 50°C for degreasing.

After step (B) and subsequent rinsing and drying, the pre-treated PPS substrates were etched in step (C) in etching compositions and under parameters as summarized in Table 1. DMSO was used from VWR Chemicals (>99%). Sulfuric acid (96%), nitric acid (65%), and phosphoric acid (85%) were used from Merck KGaA. Step (C) was carried out immediately after the respective liquid etching compositions were prepared.

Average surface roughness (Rₐ) was used afterwards as a quality indicator of the etching step. The higher Rₐ, the better the etching result.

**Table 1, summary of etching parameters and results**

| | c [vol.-%] | | | | T [°C] | t [min] | Rₐ [µm] |
|---|---|---|---|---|---|---|---|
| | DMSO | H₂SO₄ (96%) | HNO₃ (65%) | H₃PO₄ (85%) | | Etching time | |
| C0 | 0 | 0 | 0 | 0 | 0 | 0 | 0.2 |
| C1 | 0 | 100 | 0 | 0 | 60 | 10 | 0.3 |
| C2 | 0 | 0 | 0 | 100 | 60 | 10 | 0.2 |
| C3 | 5 | 0 | 0 | 95 | 60 | 10 | 0.3 |
| C4 | 0 | 0 | 100 | 0 | 60 | 10 | 5 |
| C5 | 0** | 95 | 0 | 0 | 60 | 10 | 0.3 |
| C6 | 100 | 0 | 0 | 0 | 60 | 10 | n.a. |
| C7 | 100 | 0 | 0 | 0 | 80 | 10 | n.a. |
| 1 | 1 | 99 | 0 | 0 | 70 | 10 | 1.4 |
| 2 | 2 | 98 | 0 | 0 | 70 | 10 | 3 |
| 3 | 4 | 96 | 0 | 0 | 70 | 10 | 4.3 |
| 4 | 6 | 94 | 0 | 0 | 70 | 10 | 5 |
| 5 | 8 | 92 | 0 | 0 | 70 | 10 | 4.3 |
| 6 | 10 | 90 | 0 | 0 | 70 | 10 | 5 |
| 7 | 15 | 85 | 0 | 0 | 70 | 10 | 2.9 |
| 8 | 20 | 80 | 0 | 0 | 70 | 10 | 0.8 |
| 9 | 30 | 70 | 0 | 0 | 70 | 10 | 0.5 |
| 10 | 5 | 95 | 0 | 0 | 60 | 10 | 4.6 |
| 11 | 5 | 95 | 0 | 0 | 60 | 5 | 1.5 |
| 12 | 5 | 0 | 95 | 0 | 60 | 10 | 2 |
| 13 | 5 | 93* | 0 | 0 | 60 | 10 | 0.4 |
| 14 | 5 | 90* | 0 | 0 | 80 | 20 | 0.5 |
| 15 | 5 | 90* | 0 | 0 | 90 | 20 | 1.3 |
| 16 | 5 | 90* | 0 | 0 | 100 | 20 | 6.5 |
| 17 | 5 | 90* | 0 | 0 | 100 | 10 | 1.5 |

In Table 1, * and ** have the following meaning:
* balance to 100 vol.-% through adding water
** 5 vol.-% dimethylformamide (DMF, >98%, VWR Chemicals) instead of DMSO

Since sulfuric acid (96%), nitric acid (65%), and phosphoric acid (85%) were used, each experiment contained at least small amounts of water in the liquid etching composition if not anyways explicitly added (see for example examples 13 to 17).

After step (C) an etch pattern was obtained which was further investigated by electron microscopy (for optical analysis; pictures not shown) and confocal laser scanning microscopy (for determining Rₐ values), showing a significantly increasing etching of the polymeric resin-matrix correlating with an increased Rₐ and thereby revealing e.g. the reinforcing glass fibers on the PPS substrate's surface (pictures not shown).

According to Table 1, a basically non-etching corresponds to an Rₐ of 0.2 µm to 0.3 µm (see comparative example C0). All experiments resulting in an equivalent surface roughness are considered as non-etched and insufficiently etched, respectively (see comparative examples C1 to C3 and C5).

Comparative example C4 is based on US 5,230,927. This example shows a too strong etching effect of nitric acid on PPS. The etching is uncontrolled and even destructive, literally dissolving the polymeric matrix to an undesired extent leaving behind a foam-like porous structure.

In contrast, example 12 shows that an amount of 5 vol.-% of DMSO in nitric acid (65%) results in a very acceptable etching (Rₐ 2 µm). This confirms that component (b), in particular DMSO, acts as a moderator, harmonizing the overly strong etching effect of nitric acid such that the etching is more evenly distributed and controlled. This is very beneficial in providing a suitable working window to prevent over-etching on the one hand but also allows etching at all in combination with aggressive mineral acids such as nitric acid.

Interestingly, comparative example C1 shows that, under the comparatively mild etching conditions defined for the present invention (e.g. a temperature of 60°C to 70°C), no significant etching is obtained in sulfuric acid (96%) alone. This clearly shows that these mild conditions are not sufficient for etching compared to the conditions defined in WO 2013/122804 A1, disclosing e.g. fuming sulfuric acid or vapor phase sulfur trioxide. In other words, the drastic conditions disclosed in WO'804 can be completely avoided with the much more moderate conditions utilized in the method and etching composition of the present invention due to the presence of component (b) in the liquid etching composition.

Comparative examples C2 and C3 show that the benefit of the present invention results from the combination of components (a) and (b) as defined. Comparative example C2 clearly shows that the type of mineral acid is significant since phosphoric acid alone seems to have no significant effect. This is furthermore confirmed in comparative example C3 even including 5 vol.-% DMSO in phosphoric acid. No significant etching was observed.

On the other hand, comparative examples C6 and C7 show that DMSO alone, even at elevated temperatures of 80°C, did not show any etching effect. Since no optical change was observed, Rₐ was not even measured. It was furthermore observed that the PPS substrate surfaces were not even sufficiently wetted in DMSO alone, which is a prerequisite for an acceptable etching result.

Comparative example C5 shows that dimethylformamide, which is not a sulfoxide, did not cause an etching.

Example 1 shows that already a small amount of (b) results in a noticeable effect, which is further increasing with an increased concentration of (b); compare example 2.

However, examples 3 to 6 indicate that a maximum etching effect is obtained if the concentration of DMSO is from 4 to 10 vol.-%. Although still very acceptable etching results are obtained with DMSO concentrations of about 2 vol.-% (see example 2) and 15 vol.-% (see example 7), the etching effect starts to decrease at comparatively lower and higher DMSO concentrations. Examples 8 and 9 show that still a minimum of etching was obtained although this is in some cases not enough.

Examples 3, 4, and 10 indicate that a temperature of either 60 or 70 °C does not significantly affect the etching result. In the context of the present invention, both temperatures are considered as moderate and very desirable. However, a significantly increased temperature has an impact on otherwise less favorable etching compositions. For example, examples 13 to 17 highlight the effect of additional water in the liquid etching composition. Example 13 shows that a small amount of water significantly reduces the etching result. However, this reduced etching capability is compensated for example by means of an increased temperature and/or etching time (compare examples 14 to 17).

According to our own experiments, sulfuric acid is clearly the preferred mineral acid.

Importantly, comparative examples C1, C6, and C7, as well as particularly examples 1 to 12 clearly show a synergistic effect regarding PPS surface etching.

Furthermore, it has been found out that a Rₐ of about 1 or even below proved to be already sufficient for a very acceptable metallization.

### Second set of examples - metallization:

Step (A) was carried out with reinforced polyphenylene sulfide (PPS) substrates having different grades of reinforcements: sample (A): 40 wt.-%, comprising glass-fibers; sample (B): 50 wt.-%, comprising glass-fibers.
Step (B) was carried out as defined for the first set of examples.
Step (C) was carried out for (A) with the liquid etching composition and conditions of example 10 (see Table 1); for (B) of example 11. Afterwards, the etched PPS substrates were rinsed with water.
Step (D) was carried out by contacting the etched PPS substrate with an activation composition comprising colloidal palladium with about 60 mg/L Pd (temperature: 45°C; activation time: 5 minutes). Afterwards, an accelerator was applied. As a result, an activated PPS substrate was obtained, which was subsequently rinsed.
Step (E) was carried out by contacting the activated PPS substrate with a first metalizing composition comprising nickel ions and hypophosphite as reducing agent for reducing nickel ions to metallic nickel (temperature: 35°C; plating time: 10 minutes; pH: alkaline). As a result, a first metalized PPS substrate was obtained comprising an electrolessly deposited nickel alloy layer comprising about 5 to 10 % phosphorous. The obtained PPS substrate was subsequently rinsed with water.
   After step (E) and for sample (A), the first metalized PPS substrate was contacted prior to step (F) with an acidic treatment composition comprising ammonium hydrogen fluoride for about 2 minutes at 60°C. For the alternative sample (B), the first metalized PPS substrate was alternatively heat-treated for 2 hours to 200°C. In both cases, undesired incorporated hydrogen was removed to avoid hydrogen embrittlement.
Step (F) was carried out by contacting the first metalized PPS substrate with a second metalizing composition comprising copper ions (pH: about 8; temperature: 50°C; plating time: 10 minutes; current density: 1 to 2 A/dm²). As a result, a second metalized PPS substrate was obtained comprising a copper layer.

In a subsequent step (G), the second metallized PPS substrate was contacted with an acidic copper composition for depositing a further copper layer (temperature: about 25°C, plating time: 60 min, current density: 3 to 4 A/dm²). As a result, a very smooth and leveled copper surface was obtained.

Finally, both PPS substrates were subjected to a thermo-shock (from 230°C cooled down to RT within 5 minutes). Afterwards, peel strength of the copper layer (prepared as a stripe having a breadth of about 10 to 20 mm) was determined based on DIN EN 1464 (speed: 50 mm/min).

For sample (A) a peel strength of about 0.4 N/mm, for sample (B) of about 0.69 N/mm was obtained. These examples show that a fluoride/bifluoride anions-free treatment is possible and results in very acceptable peel strength values.

## Claims

1. A method for etching at least one surface of a sulfur-containing thermoplastic resin-substrate, the method comprising the steps
(A) providing the resin-substrate,
(B) optionally, contacting the provided resin-substrate with one or more than one pre-treatment composition such that a pre-treated resin-substrate results,
(C) contacting the resin-substrate obtained after step (A) or (B) with a liquid etching composition such that an etched resin-substrate results, the etching composition comprising
(a) a mineral acid selected from the group consisting of sulfuric acid and nitric acid, and
(b) a dialkyl sulfoxide and/or a phenyl-comprising sulfoxide.

2. The method of claim 1, wherein in step (A) the sulfur-containing thermoplastic resin-substrate has a melting point of 230°C or more, preferably of 250°C or more, even more preferably of 260°C or more, yet even more preferably of 270°C or more, most preferably of 280°C or more.

3. The method of claim 1 or 2, wherein in step (A) the sulfur-containing thermoplastic resin-substrate comprises polyphenylene sulfide (PPS), more preferably reinforced polyphenylene sulfide (PPS), most preferably glass-reinforced polyphenylene sulfide (PPS).

4. The method of any of claims 1 to 3, wherein in the liquid etching composition the mineral acid comprises, preferably is, sulfuric acid.

5. The method of any of claims 1 to 4, wherein in the liquid etching composition the dialkyl sulfoxide comprises, preferably is, dimethyl sulfoxide (DMSO).

6. The method of any of claims 1 to 5, wherein in the liquid etching composition (a) has a total concentration ranging from 45 vol.-% to 99.4 vol.-%, based on the total volume of the liquid etching composition, preferably from 52 vol.-% to 98.5 vol.-%, more preferably from 60 vol.-% to 97.5 vol.-%, even more preferably from 68 vol.-% to 96.5 vol.-%, yet even more preferably from 76 vol.-% to 95.5 vol.-%, most preferably from 84 vol.-% to 94.5 vol.-%.

7. The method of any of claims 1 to 6, wherein in the liquid etching composition (a) has a total concentration ranging from 85.5 vol.-% to 94.5 vol.-%, based on the total volume of the liquid etching composition, preferably from 87 vol.-% to 94.5 vol.-%, more preferably from 88 vol.-% to 94.5 vol.-%, most preferably from 89 vol.-% to 94 vol.-%.

8. The method of any of claims 1 to 7, wherein in the liquid etching composition (b) has a total concentration ranging from 0.5 vol.-% to 35 vol.-%, based on the total volume of the liquid etching composition, preferably from 1 vol.-% to 30 vol.-%, more preferably from 1.5 vol.-% to 25 vol.-%, even more preferably from 2 vol.-% to 20 vol.-%, most preferably from 2.5 vol.-% to 15 vol.-%.

9. The method of any of claims 1 to 8, wherein in the liquid etching composition (b) has a total concentration ranging from 3 vol.-% to 10 vol.-%, based on the total volume of the liquid etching composition, preferably from 3 vol.-% to 9 vol.-%, more preferably from 3 vol.-% to 8 vol.-%, even more preferably from 3 vol.-% to 7 vol.-%, most preferably from 3 vol.-% to 6 vol.-%.

10. The method of any of claims 1 to 9, wherein the liquid etching composition consists of (a) and (b),
or
besides (a) and (b), additionally comprises (c) water, preferably a balance of water.

11. The method of any of claims 1 to 10, wherein during step (C) the liquid etching composition has a temperature ranging from 30°C to 120°C, preferably from 35°C to 100°C, more preferably from 40°C to 90°C, even more preferably from 45°C to 80°C, most preferably from 50°C to 75°C.

12. The method of any of claims 1 to 11 additionally comprising after step (C) step
(D) contacting the etched resin-substrate with an activation composition such that an activated resin-substrate is obtained;
and/or
(E) contacting the etched resin-substrate or the activated resin-substrate with a first metalizing composition such that a first metal or metal alloy layer is deposited thereon resulting in a first metalized resin-substrate.

13. The method of claim 12 additionally comprising after step (D) or (E), step (F) contacting the activated resin-substrate or the first metallized resin-substrate with a second metalizing composition such that a second metal or metal alloy layer is deposited thereon resulting in a second metalized resin-substrate.

14. The method of claim 13, wherein prior to step (F) the first metallized resin-substrate is
- heat-treated, preferably at a temperature ranging from 120°C to 260°C, more preferably from 140°C to 250°C, even more preferably from 160°C to 240°C, most preferably from 180°C to 220°C,
and/or
- contacted with a treatment composition, preferably comprising fluoride and/or bifluoride anions

15. A liquid etching composition for etching at least one surface of a sulfur-containing thermoplastic resin-substrate, the liquid etching composition comprising, based on the total volume of the liquid etching composition,
(a) 84 vol.-% to 94.5 vol.-%. sulfuric acid,
(b) 3 vol.-% to 10 vol.-% dimethyl sulfoxide, and
(c) 2.5 vol.-% to 6 vol.-% water.
